# EUROPEAN PATENT APPLICATION

(11) **EP 4 372 633 A1**
(43) Date of publication of application: **22.05.2024**
(21) Application number: 23817278.7
(22) Date of filing: 08.09.2023
(51) Int. Cl.: G06Q 10/00

(54) **RECYCLING INFORMATION MANAGEMENT METHOD AND DEVICE THEREFOR**

(30) Priority: 13.09.2022 KR 20220115005
(71) Applicant: Recycle Ledger Co., Ltd., Seocho-gu Seoul 06721 (KR)
(72) Inventor: KIM, Gee Jong, Seongnam-si, Gyeonggi-do 13441 (KR)
(74) Representative: Moosedog Oy
(86) International application number: PCT/KR2023/013508
(87) International publication number: WO 2024/058502

(57) **Abstract**

Provided are a recycling information managing method and a recycling information managing apparatus. The recycling information managing apparatus receives, from a user terminal of a discharger discharging recyclables or waste, recycling information including tag information of a recycling bin containing recyclables or waste and identification information of the discharger, stores the recycling information in a blockchain, maps identification information of a first collector who collected the recycling bin included in the recycling information with the tag information of the recycling bin collected by the first collector, stores a result of the mapping in the blockchain, maps identification information of an (n-1)th collector (where n is a natural number equal to or greater than 2) with the tag information of the recycling bin collected by the n-th collector, and stores a result of the mapping in the blockchain.

## Description

### Technical Field

The present disclosure relates to a method and apparatus for managing recycling information, and more particularly, to a method and apparatus for tracking and managing the entire process from discharge to final collection of recyclables or waste.

### Background Art

Climate change becomes more serious due to global warming, and countries including the United States and Europe are working toward carbon neutrality (carbon reduction). For effective carbon reduction, it is important to know exactly where and how much carbon is emitted and who reduces carbon through recycling, etc. Carbon footprints so far are rough estimates based on sampling and thus are difficult to trust. There is a need to prevent greenwashing which actually uses new resources but pretends to use recycled resources to pass the use of new resources off as Environmental, Social and Governance (ESG) activities. For example, the price of waste cooking oil may be more expensive than that of cooking oil, and, in this case, cooking oil may be sold maliciously disguised as waste cooking oil, which is undesirable from an environmental standpoint. Therefore, it is necessary to track the entire process from the discharge of recyclables or waste to a final collection stage. In the case of some foods such as vegetables and meat, there is a service that tracks a distribution process from production to consumption, but, because the distribution process of these foods and a distribution process from discharge to collection of recyclables or waste are different from each other, it is difficult to apply the conventional tracking service of the distribution process of foods without changes.

### Disclosure

### Technical Problem

Provided are a recycling information managing method and a recycling information managing apparatus, by which the entire transaction process from discharge to collection of recyclables or waste may be tracked and managed.

### Technical Solution

According to an aspect of the present disclosure, a recycling information managing method performed by a recycling information managing apparatus includes, when receiving, from a user terminal of a discharger discharging recyclables or waste, recycling information including tag information of a recycling bin containing the recyclables or waste and identification information of the discharger, storing the recycling information in a blockchain; when receiving identification information of a first collector who collected the recycling bin included in the recycling information from a user terminal of the first collector, mapping first collection information including the identification information of the first collector with the tag information of the recycling bin collected by the first collector and storing the first collection information in the blockchain; and, when receiving identification information of an n-th collector who collected the recycling bin from an (n-1)th collector (where n is a natural number equal to or greater than 2) from a user terminal of the n-th collector, mapping n-th collection information including the identification information of the n-th collector with the tag information of the recycling bin collected by the n-th collector and storing the n-th collection information in the blockchain.

According to an aspect of the present disclosure, a recycling information managing apparatus includes a discharge reception unit configured to, when receiving, from a user terminal of a discharger discharging recyclables or waste, recycling information including tag information of a recycling bin and identification information of the discharger, store the recycling information in a blockchain; a first collection unit configured to, when receiving identification information of a first collector who collected the recycling bin included in the recycling information from a user terminal of the first collector, store, in the blockchain, first collection information in which the identification information of the first collector is mapped with the tag information of the recycling bin collected by the first collector; and a second collection unit configured to, when receiving identification information of an n-th collector who collected the recycling bin from an (n-1)th collector (where n is a natural number equal to or greater than 2) from a user terminal of the n-th collector, store, in the blockchain, n-th collection information in which the identification information of the n-th collector is mapped with the tag information of the recycling bin collected by the n-th collector.

### Advantageous Effects

According to an embodiment of the present invention, the entire process from discharge to collection of recyclables or waste may be tracked and managed. For example, in the case of waste cooking oil, the process from discharge to final collection may be tracked and managed, and thus regular cooking oil may be prevented from being disguised as waste cooking oil. In another example, the amount of carbon emission generated during a collection process of recyclables or waste may be calculated, and thus Environmental, Social and Governance (ESG) may be practiced in recycling collection services.

### Description of Drawings

FIG. 1 is a block diagram of an example of a process of collecting recyclables and the like, according to an embodiment of the present disclosure.
FIG. 2 is a diagram illustrating an example of a recycling information managing apparatus according to an embodiment of the present disclosure.
FIG. 3 is a diagram illustrating an example of a recycling bin according to an embodiment of the present disclosure.
FIG. 4 is a flowchart of an example of a recycling information managing method according to an embodiment of the present disclosure.
FIG. 5 is a diagram illustrating an example of a method of registering information of recyclables discharged by a discharge source, according to an embodiment of the present disclosure.
FIG. 6 is a block diagram of an example of a method of storing collection information of a first collector in a blockchain, according to an embodiment of the present disclosure.
FIGS. 7 and 8 are diagrams illustrating an example of a method of storing collection information of a second or higher collector in a blockchain, according to an embodiment of the present disclosure.
FIG. 9 is a flowchart of an example of a method of verifying a discharge request of a discharger, according to an embodiment of the present disclosure.
FIG. 10 is a diagram illustrating an example of a method, performed by a final collector, of verifying a recycling bin, according to an embodiment of the present disclosure.
FIG. 11 illustrates an example of displaying a recycling bin list stored in a blockchain, according to an embodiment of the present disclosure.
FIG. 12 illustrates an example of a method of checking a location from a recycling bin list, according to an embodiment of the present disclosure.
FIG. 13 is a diagram illustrating an example of a method of storing information stored in a blockchain, in a distributed manner, according to an embodiment of the present disclosure.
FIG. 14 is a diagram illustrating an example of a method of calculating the amount of carbon emissions produced to collect recyclables, according to an embodiment of the present disclosure.
FIG. 15 is a block diagram of a structure of an example of a recycling information managing apparatus according to an embodiment of the present disclosure.
FIG. 16 is a table showing an example of recycling information stored in a blockchain, according to an embodiment of the present disclosure.

### Mode for Invention

A recycling information managing method and a recycling information managing apparatus according to an embodiment of the present disclosure will now be described in detail with reference to the accompanying drawings.

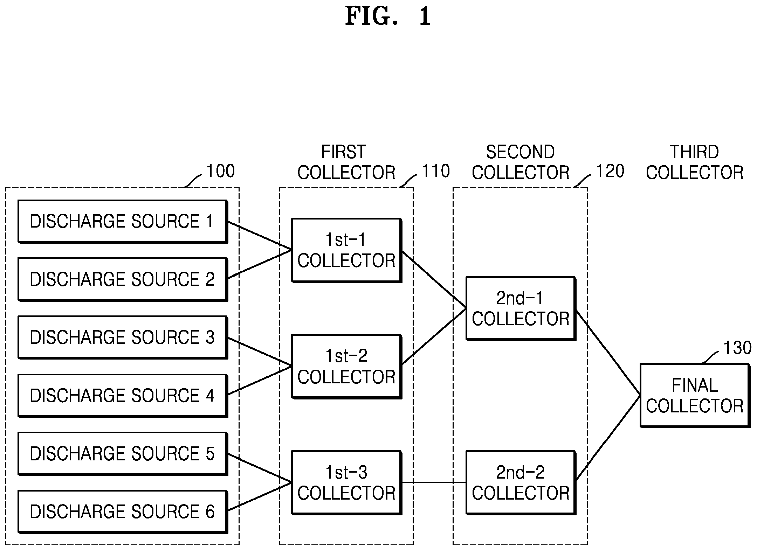

FIG. 1 is a block diagram of an example of a process of collecting recyclables and the like, according to an embodiment of the present disclosure.

Referring to FIG. 1, at least one discharge source 100 is where recyclables or waste are discharged. For example, the at least one discharge source 100 may be various places, such as a home, a restaurant, or a factory, but is not limited to any specific location. Recyclables or waste come in many different types, such as paper, iron, waste oil, clothing waste, and nuclear power plant waste, and are not limited to just one.

A first collector 110 is a person who visits the at least one discharge source 100 and collects recyclables or waste. For example, a 1st-1 collector may collect recyclables or waste from first and second discharge sources, a 1st-2 collector may collect recyclables or waste from third and fourth discharge sources, and a 1st-3 collector may collect recyclables or waste from fifth and sixth discharge sources.

A second collector 120 is a person who collects recyclables or waste from the at least one first collector 110. For example, a 2nd-1 collector may collect recyclables or waste from the 1st-1 collector and the 1st-2 collector, and a 2nd-2 collector may collect recyclables or waste from the 1st-3 collector.

In this way, an n-th (where n is a natural number equal to or greater than 3) collector may collect recyclables or waste from at least one (n-1)th collector. A process of collecting recyclables or waste may include multiple collection steps. In the present embodiment, for convenience of explanation, a third collector is indicated as a final collector 130. However, this is only an example, and a fourth or fifth collector may be a final collector. According to another embodiment, the final collector 130 may directly collect recyclables or waste from the first collector 110, rather than via the second collector 120. According to another embodiment, the final collector 130 may be provided in plurality. However, for convenience of explanation, the following description will be made assuming that the first, second, and third collectors 110, 120, and 130 exist as shown in FIG. 1.

A process from discharge to collection of recyclables or waste is the same. Thus, for convenience of explanation, only 'recyclables' will now mentioned and described, but, recyclables in each embodiment may be replaced by and interpreted as waste. For convenience of explanation, a case where waste cooking oil is discharged from a restaurant, etc. will now be assumed and described.

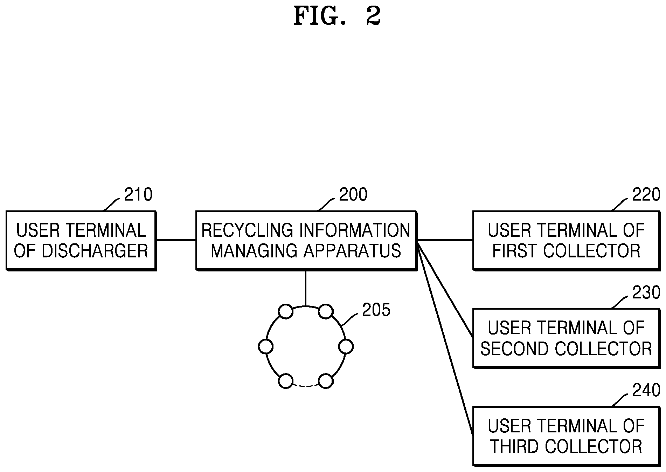

FIG. 2 is a diagram illustrating an example of a recycling information managing apparatus according to an embodiment of the present disclosure.

Referring to FIGS. 1 and 2 together, a recycling information managing apparatus 200 is connected to a user terminal 210 of at least one discharger who discharges recyclables from the at least one discharge source 100, a user terminal 220 of at least one first collector, a user terminal 230 of at least one second collector, and a user terminal 240 of at least one third collector, via wired or wireless communication networks, respectively. The user terminals 210, 220, 230, and 240 may be a variety of terminals connectable to the recycling information managing apparatus 200, such as a general computer, a tablet PC, or a smartphone, but embodiments are not limited to a specific type.

A collector at each step and a discharger may access the recycling information managing apparatus 200 through a login process after registering as a member. When registering as a member, a discharger may register discharger information including location information (e.g., an address), contact information, and the like of a discharge source. The collector at each step may register collector information including location information, contact information, and the like of a collection source, when registering as a member.

The recycling information managing apparatus 200 stores and manages information of each step from discharge to collection of recyclables in a blockchain 205. A method of storing and managing recycling information will be discussed in detail below. The recycling information managing apparatus 200 may be implemented as at least one server, a cloud system, or the like.

There is recycling information for recyclables and waste information for waste. However, in the following embodiments including the present embodiment, 'recycling information' will now be mentioned and described for convenience of explanation. Therefore, in each embodiment, recycling information is not limited to information about recyclables, and, when a discharge is waste, recycling information may be interpreted as information about waste.

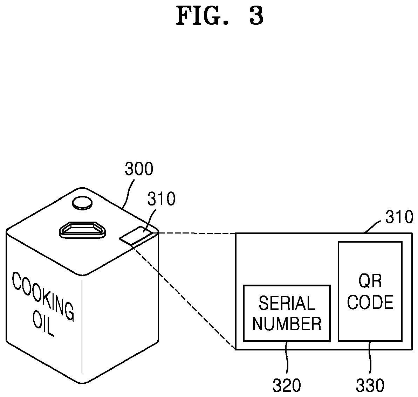

FIG. 3 is a diagram illustrating an example of a recycling bin according to an embodiment of the present disclosure.

FIG. 3 shows an example of a recycling bin 300 that discharges waste cooking oil among recyclables. The recycling bin 300 may use a cooking oil container without changes. For example, after purchasing and using cooking oil, a discharge source may put the waste cooking oil back into the container of the cooking oil to discharge the waste cooking oil. In this case, the container containing the waste cooking oil becomes the recycling bin 300 according to the present embodiment. According to another embodiment, there may be a separate dedicated recycling bin for discharging waste cooking oil. When a recyclable material is a type other than waste cooking oil, there may be a separate dedicated recycling bin or plastic bag suitable for the recyclable material. For example, when a discharge is medical waste or nuclear power plant waste, a recycling bin may be a bin containing medical waste or nuclear power plant waste. However, for convenience of explanation, a description will now be made using the recycling bin 300 according to the present embodiment that discharges waste cooking oil.

A tag 310 including tag information is attached to one side of the recycling bin 300. The tag information is stored as information for identifying a recylcing bin (i.e., recycling bin identification information) in a QR code 330. The tag information may further include various pieces of information, such as, a serial number 320. The present embodiment presents a tag 310 including the QR code 330, but this is only an example. Various types of conventional tags, such as a tag including a barcode or a near field communication (NFC) tag, may be used.

According to an embodiment, when a discharge source purchases cooking oil, the discharge source may attach the tag 310 to the container of the cooking oil and then use the container as the recycling bin 300. According to another embodiment, a discharge source may access the recycling information managing apparatus 200 through the user terminal 210 of a discharger, then download a QR code, etc., print the QR code on the tag 310, and attach the tag 310 to the recycling bin 300. Alternatively, the tag may be obtained through various methods, such as the discharge source purchasing a tag. For example, when the tag 310 is an NFC tag, the user terminal 210 of a discharger may input tag information received from the recycling information managing apparatus 200 into the NFC tag through NFC communication.

According to another embodiment, in order to prevent recycling bin identification information present in the QR code 330 from being forged or copied and used, the recycling bin identification information present in the QR code 330 may be encrypted. When the recycling bin identification information is encrypted and the recycling information managing apparatus 200 receives the recycling bin identification information from, for example, the user terminal 210 of a discharger, the recycling information managing apparatus 200 may decrypt the recycling bin identification information by using a predefined encryption key (or a decryption key).

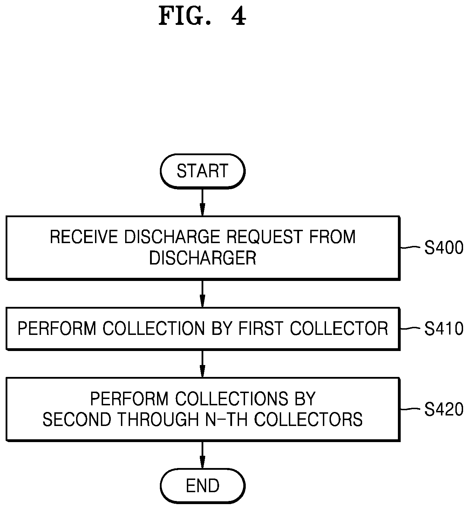

FIG. 4 is a flowchart of an example of a recycling information managing method according to an embodiment of the present disclosure.

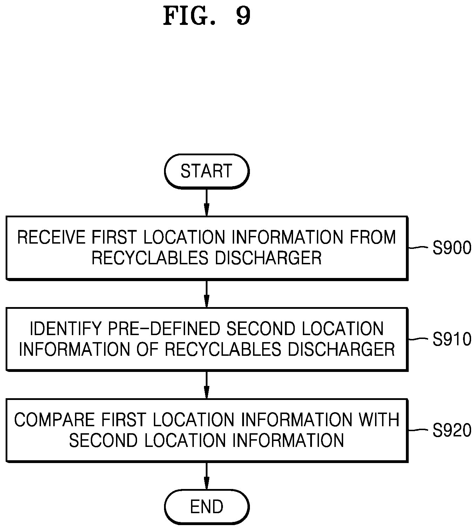

Referring to FIGS. 1 through 4 together, the recycling information managing apparatus 200 (hereinafter, referred to as the apparatus 200) receives a discharge request from the user terminal 210 of a discharger who discharges recyclables (S400). The apparatus 200 stores and manages recycling information included in the discharge request in the blockchain 205. According to an embodiment, the recycling information included in the discharge information may include tag information of a recycling bin containing recyclables and identification information (e.g., a login identification (ID), a phone number, and a PIN) of the discharger. According to another embodiment, the recycling information may further include discharge location information identified based on the location of the discharger's user terminal, the weight or volume of the recycling bin, and video information of a discharge process. Based on the discharge location information included in the recycling information, a process may be performed to verify whether the discharge location of a discharge source is a legitimate discharge at a pre-registered location. A method of verifying a discharge location will be reviewed again with reference to FIG. 9.

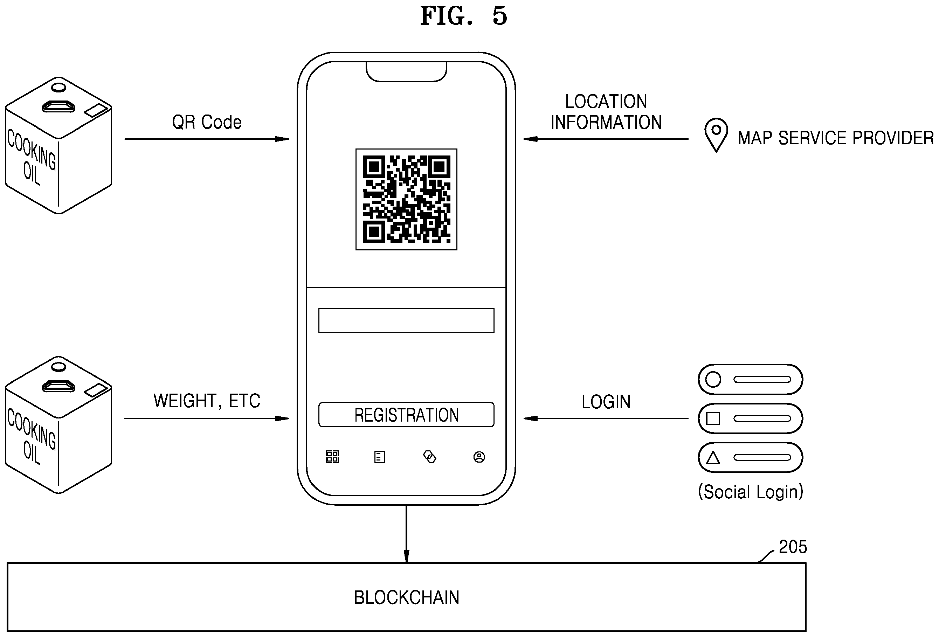

According to an embodiment, the discharger may request discharge by tagging the tag 310 of at least one recycling bin 300 where to discharge by using the user terminal 210. For example, the user terminal 210 of a discharger may read tag information of the recycling bin 300 through tagging and generate recycling information. An example of a method, performed by a discharger, of storing recycling information generated through tagging in a blockchain will be reviewed again with reference to FIG. 5.

The apparatus 200 maps first collection information including the identification information of a first collector with the tag information of a recycling bin which is collected by the first collector, and stores a result of the mapping in the blockchain 205 (S410). The first collection information may further include location information of the user terminal 220 of the first collector together with identification information of the first collector. According to another embodiment, the first collection information may further include various pieces of information such as a weight, a volume, or image information captured during the collection process, along with the location information.

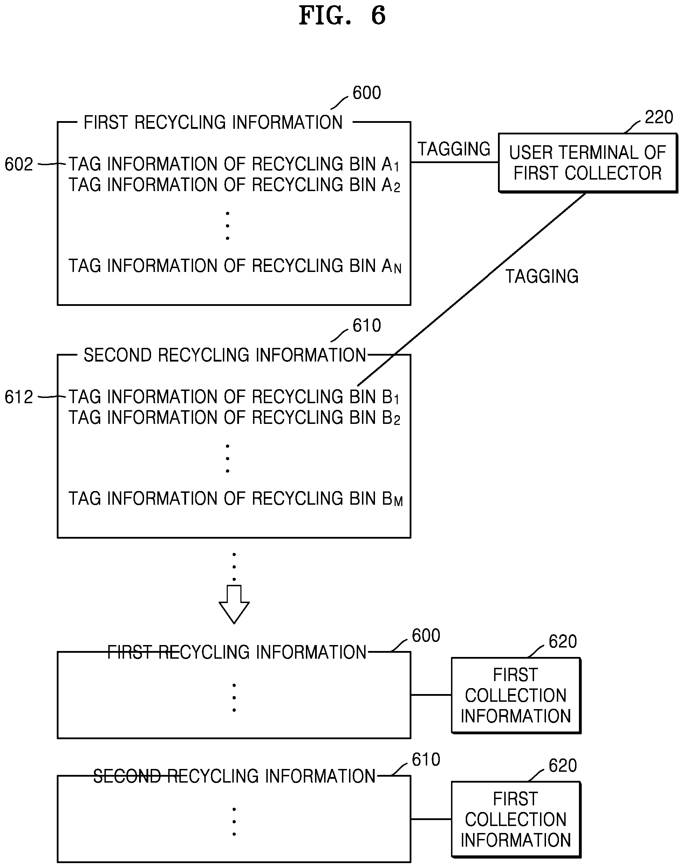

In the example of FIG. 1, when the 1st-1 collector collects two recycling bins from the first discharge source and three recycling bins from the second discharge source, the apparatus 200 maps tag information of the two recycling bins of the first discharge source and tag information of the three recycling bins of the second discharge source with first collection information including the identification information of the 1st-1 collector and stores a result of the mapping in the blockchain 205. According to an embodiment, the first collector may obtain tag information of the recycling bin 300 by tagging the tag 310 of the recycling bin 300 with the user terminal 220, and may transmit the tag information to the apparatus 200. However, in this case, there is an inconvenience in that the first collector needs to perform a process of tagging recycling bins 300 one by one. According to another embodiment, when the first collector tags only the tag 310 of one recycling bin 300 among a plurality of recycling bins discharged from a discharge source, the apparatus 200 may automatically identify the tag information of the remaining recycling bins discharged by the discharge source, map the respective pieces of tag information with the first collection information, and store a result of the mapping. This will be reviewed again with reference to FIG. 6.

When the apparatus 200 receives identification information of an n-th collector from a user terminal (e.g., 230 or 240) of the n-th collector who collected the recycling bin from an (n-1)th collector (where n is a natural number equal to or greater than 2), the apparatus 200 maps n-th collection information including the identification information of the n-th collector with the tag information of the recycling bin collected by the n-th collector and stores a result of the mapping in a blockchain (S420). The n-th collection information may further include location information of the user terminal (e.g., 230 or 240) of the n-th collector together with identification information of the n-th collector. According to an embodiment, the n-th collection information may further include various pieces of information such as a weight, a volume of a recycling bin, or image information corresponding to a collection video, in addition to the location information.

When the third collector is the final collector 130 as shown in FIG. 1, the apparatus 200 maps tag information of at least one recycling bin that the second collector 120 has collected from at least one first collector 110 with second collection information including the identification information of the second collector 120, and stores a result of the mapping in the blockchain 205. In addition, the apparatus 200 maps tag information of at least one recycling bin that the final collector 130 has collected from the second collector 120 with third collection information including the identification information of the third collector, and stores a result of the mapping in the blockchain 205.

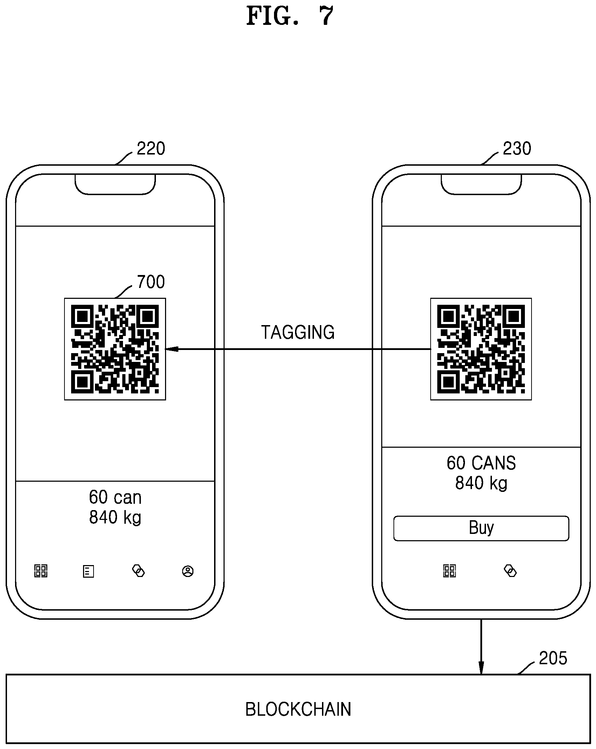

According to another embodiment, the n-th collector may obtain tag information of a recycling bin by tagging the tag of a collected recycling bin 300 with the user terminal 230 or 240, and may transmit the tag information to the apparatus 200. However, in this case, there is an inconvenience in that a process of tagging recycling bins one by one need to be performed. According to another embodiment, when the n-th collector obtains the identification information of the (n-1)th collector and transmits the same to the apparatus 200, the apparatus 200 may automatically identify the tag information of the recycling bin collected by the (n-1)th collector, map the tag information of the recycling bin collected by the (n-1)th collector with the n-th collection information of the n-th collector, and store a result of the mapping in the blockchain 205. This will be reviewed again with reference to FIG. 7.

FIG. 5 is a diagram illustrating an example of a method of registering information of recyclables discharged by a discharge source, according to an embodiment of the present disclosure.

Referring to FIG. 5, to report discharge, a discharger of a discharge source may access the apparatus 200 through the user terminal 210 of the discharger and then perform a login process. Various conventional methods may be applied to a member registration process for logging in. For example, the discharger may register as a member of the apparatus 200 according to the present embodiment by using login information used in social network services (SNS) or various platforms.

The user terminal 210 of a discharger reads tag information from the tag 310 of at least one recycling bin 300. For example, when the tag 310 includes a QR code, the user terminal 210 of a discharger may read the QR code 330 to obtain the recycling bin identification information included in the QR code 330. According to an embodiment, the recycling bin identification information may be encrypted information.

According to another embodiment, the user terminal 210 of a discharger may further obtain location information. For example, the user terminal 210 of a discharger may obtain coordinate values, such as a latitude and a longitude, through, for example, a global positioning system (GPS), or may obtain address information, etc. corresponding to the coordinate values of a user terminal through various conventional location information providers. Hereinafter, the location information refers to information that can identify a location, and may be in various forms such as coordinate values or address information. In other words, according to an embodiment, the location information may be in various forms such as coordinate values or address information.

According to another embodiment, the user terminal 210 of a discharger may further obtain information of a weight, volume, or the like of the recycling bin 300. For example, the user terminal 210 of a discharger may receive the weight or volume information of the recycling bin 300 measured by an external weight measuring device directly from the weight measuring device through a wired or wireless communication network, or may receive additional information such as the weight or volume, directly from a user through a user interface.

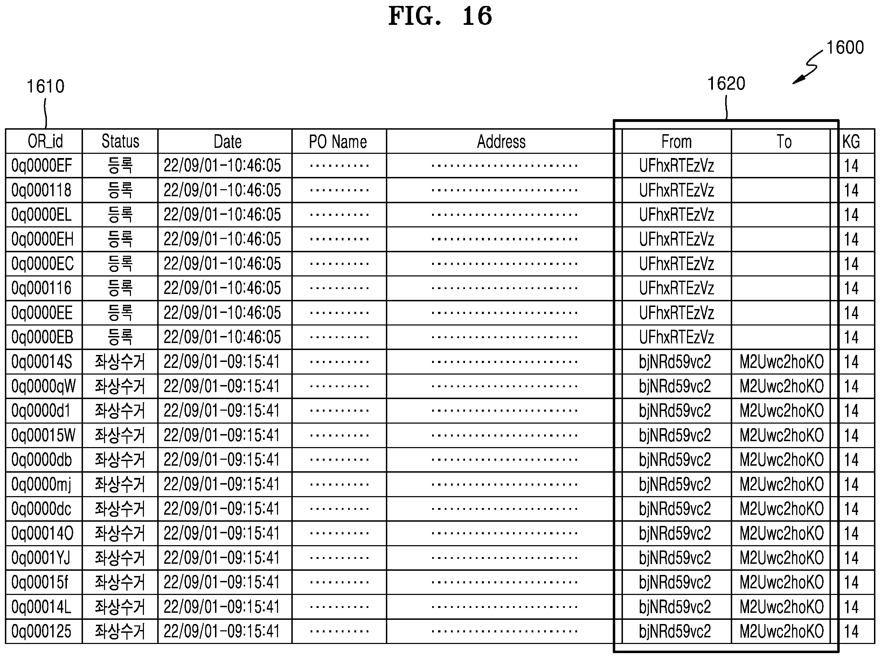

The user terminal 210 of a discharger transmits, to the apparatus 200, a discharge request including recycling information including tag information read from the tag 310 of the at least one recycling bin 300, location information of the user terminal 210 of a discharger, and the weight, etc. of each recycling bin 300. The apparatus 200 stores the recycling information included in the discharge request in the blockchain 205. An example of storing recycling information in the blockchain 205 is shown in FIG. 16. For example, the apparatus 200 may map identification information, discharge location information, etc. of a discharger who has discharged each recycling bin 300 with the tag information of each recycling bin 300, and store a result of the mapping in the blockchain 205. According to another embodiment, in response to a discharge request, the apparatus 200 may verify whether the location of the discharge request is legitimate, by using the discharge location information, and then store the recycling information. An example of a process of verifying the discharge request is reviewed again with reference to FIG. 9.

According to another embodiment, the user terminal 210 of a discharger may display, on a screen, a recycling bin list including at least one piece of tag information obtained through tagging. The user terminal 210 of a discharger may provide a function for editing the recycling bin list (for example, deletion of specific tag information from the recycling bin list).

FIG. 6 is a block diagram of an example of a method of storing collection information of a first collector in a blockchain, according to an embodiment of the present disclosure.

Referring to FIG. 6, the first collector collects a recycling bin discharged from at least one discharge source. The apparatus 200 maps first collection information including the identification information of the first collector with the tag information of a recycling bin collected by the first collector from a discharge source, and stores a result of the mapping in a blockchain. For example, the apparatus 200 may store transaction details between the discharger and first collector of the recycling bin in the blockchain, based on the tag information of the recycling bin, in a similar manner to a method of storing the transaction details of cryptocurrency, An example thereof is illustrated in FIG. 16.

The first collector may obtain tag information of recycling bins 300 by tagging the tags 310 of the recycling bins 300 one by one by using the user terminal 220, and then may transmit the tag information to the apparatus 200. However, in this case, there is an inconvenience in that the first collector needs to tag the recycling bins 300 one by one. Accordingly, the present embodiment presents a method of registering first collection information through a process in which the first collector tags the tag 310 of one recycling bin 300 rather than all of a plurality of recycling bins.

For example, it is assumed that a first discharge source requests the apparatus 200 to discharge N recycling bins, and a second discharge source requests the apparatus 200 to discharge M recycling bins. The first collector visits the first discharge source and collects the N recycling bins. At this time, the first collector tags a tag of one recycling bin (for example, recycling bin A1) without needing to tag respective tags 310 of the N recycling bins 300 one by one. The apparatus 200 receives tag information 602 of the recycling bin A1 along with identification information of the first collector from the user terminal 220 of the first collector. In the blockchain 205, there is recycling information 600 and 610 registered by each discharge source through the method of FIG. 5, etc. The apparatus 200 may identify first recycling information 600 in which the tag information 602 of the recycling bin A1 received from the user terminal 220 of the first collector exists among the recycling information 600 and 610 previously registered in the blockchain 205. The apparatus 200 maps the tag information of all recycling bins present in the first recycling information 600 with the first collection information 620 of the first collector and stores a result of the mapping.

Additionally, when the first collector visits the second discharge source and collects the M recycling bins, the first collector tags one recycling bin (for example, recycling bin B1) rather than all of the M recycling bins. The apparatus 200 may receive tag information 604 of the recycling bin B1 along with the identification information of the first collector from the user terminal 220 of the first collector. The apparatus 200 identifies second recycling information 610 by searching for the blockchain 205 based on the tag information 604 of the recycling bin B1, maps tag information of all recycling bins included in the second recycling information 610 with the first collection information 620 of the first collector, and stores a result of the mapping.

The total number of recycling bins collected by the first collector from the first and second discharge sources is N*M, but the collected N*M recycling bins is mapped with the first collection information 620 through only one tagging in each of the first and second discharge sources, and may store a result of the mapping in the blockchain 205.

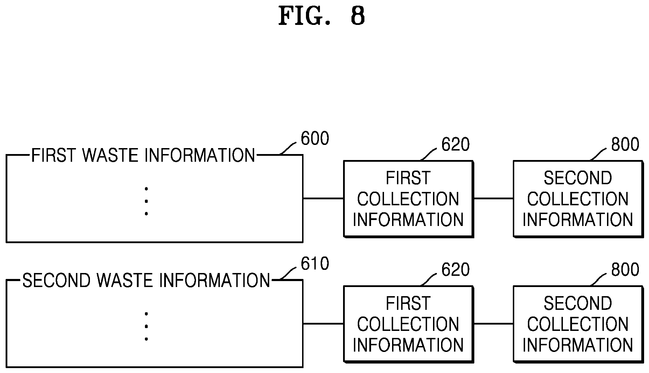

FIGS. 7 and 8 are diagrams illustrating an example of a method of storing collection information of a second or higher collector in a blockchain, according to an embodiment of the present disclosure.

Referring to FIG. 7, an n-th (where n is a natural number equal to or greater than 2) collector collects a recycling bin from an (n-1)th collector rather than a discharge source. The first collector visits the discharge source and collects the recycling bin, but the n-th collector may collect the recycling bin from the first collector who visited a designated collection location.

The n-th collector may obtain recycling bin tag information by tagging the tags of recycling bins collected from the (n-1)th collector, and then transmit the obtained recycling bin tag information to an apparatus to achieve registration. However, it takes a lot of time to tag numerous recycling bins one by one. It is impossible for the n-th collector to register tag information of recycling bins collected from the (n-1)th collector by tagging only one of the recycling bins by using the method shown in FIG. 6. For example, the method of FIG. 6 may not be applied because the recycling bins collected by the (n-1)th collector are not recycling bins discharged from a single discharge source but a mixture of recycling bins discharged from multiple discharge sources.

Accordingly, the present embodiment uses a method, performed by the n-th collector, of registering tag information of a plurality of recycling bins collected from the (n-1)th collector in a blockchain by using a method of obtaining the identification information of the (n-1)th collector and transmitting the obtained identification information to the apparatus. For example, when a second collector collects a plurality of recycling bins from the first collector, the user terminal 230 of the second collector transmits identification information of the first collector along with second collection information including identification information of the second collector to the apparatus 200. The user terminal 230 of the second collector may receive the identification information of the first collector directly from the second collector through a user interface, or may receive the identification information of the first collector from the user terminal 220 of the first collector. The present embodiment proposes a method in which the user terminal 220 of the first collector displays a QR code including the identification information of the first collector on the screen, and the user terminal 230 of the second collector obtains the identification information of the first collector by photographing the QR code, etc. displayed on the user terminal 220 of the first collector with a camera. However, this is only an embodiment, and the present disclosure is not limited thereto.

According to another embodiment, the second collector may check, for example, the weight, volume, or number of all recycling bins collected from the first collector through a separate measuring device, and then may collect them. For example, when the total weight, volume, or number of first collector's recycling bins stored in the blockchain is identical with the total weight, volume, or number of all recycling bins actually measured by the second collector, the second collector may normally collect the recycling bins from the first collector. When an error occurs between the weight, volume, or number of recycling bins actually measured and the weight, volume, or number of recycling bins of the first collector stored in the blockchain, the first collector or second collector may request the discharger of recycling bin having the error to delete the tag information of the recycling bin having the error.

Referring to FIG. 8, when the apparatus 200 receives the identification information of the first collector from the user terminal 230 of the second collector, the apparatus 200 identifies the tag information of a recycling bin mapped and stored with the identification information of the first collector in the blockchain 205. For example, the tag information of a recycling bin collected by the first collector is tag information of the first recycling information 600 and the second recycling information 610 mapped with the first collection information 620 including the identification information of the first collector and stored in the blockchain 205 as described above with reference to FIG. 6. Therefore, when the apparatus 200 receives the identification information of the first collector from the user terminal 230 of the second collector, the apparatus 200 may identify tag information of a plurality of recycling bins of the first recycling information 600 and the second recycling information 610 which are mapped and stored with the identification information 620 of the first collector. The apparatus 200 maps the tag information of the plurality of recycling bins identified from the blockchain 205 based on the identification information of the first collector with second collection information 800 of the second collector and stores a result of the mapping in the blockchain 205. In this way, n-th collection information of the n-th collector may be mapped and stored with the tag information of the recycling bin.

According to another embodiment, when the n-th collector collects a recycling bin from the (n-1)th collector, the apparatus 200 may store transaction details between the (n-1)th collector who sold the collected recycling bin and the n-th collector who purchased the same, in the blockchain, based on the tag information of the recycling bin. This will be reviewed again with reference to FIG. 16.

FIG. 9 is a flowchart of an example of a method of verifying a discharge request of a discharger, according to an embodiment of the present disclosure.

Referring to FIG. 9, the apparatus 200 receives first location information from the user terminal 210 of a discharger (S900). The first location information is information indicating a current location of the user terminal 210 of a discharger, and may be included in recycling information of the discharge request. The apparatus 200 identifies second location information of a discharge source pre-registered based on the discharger's identification information included in the recycling information (S910). For example, in FIG. 1, location information of a first discharge source and an N-th discharge source may be pre-registered in an apparatus.

The apparatus 200 performs a verification process of comparing the first location information identified through the discharger's user terminal 210 with the second location information pre-registered in the apparatus 200 (S920). For example, when location information of the user terminal 210 of a discharger (i.e., the first location information) identified when a discharger of the first discharge source registers a discharge request in the apparatus 200 is A, and location information of the first discharge source pre-registered (i.e., the second location information) is B, the apparatus 200 may reject the discharge request, because the two pieces of location information are different. When the first location information and the second location information are identical with each other, the apparatus 200 may normally receive the discharge request and store the recycling information included in the discharge request in the blockchain 205. When a new discharge request is registered, the apparatus 200 may transmit a notification that the new discharge request exists to the user terminal of at least one first collector, or may provide a user interface capable of identifying the first collector due to the first collector accessing the apparatus 200.

According to another embodiment, the apparatus 200 may verify whether a collection location of a collector at each stage is identical with a previously-registered collection location. For example, the apparatus 200 may also receive the location information of the user terminal of the n-th collector when receiving the n-th collection information from the user terminal of the n-th collector, and may compare the received location information with a collection location of the n-th collector previously registered in the apparatus 200 to thereby verify the collection location. The apparatus 200 may verify the collection location every time the apparatus 200 receives the n-th collection information, or may verify the collection location when a final collector requests verification of the collection location.

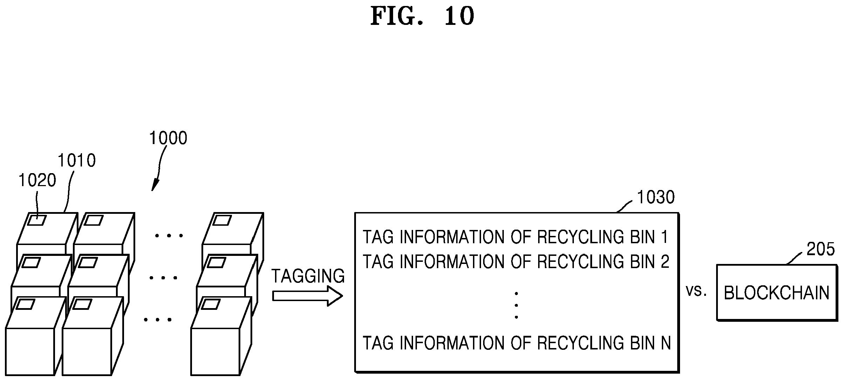

FIG. 10 is a diagram illustrating an example of a method, performed by a final collector, of verifying a recycling bin, according to an embodiment of the present disclosure.

Referring to FIG. 10, the final collector may verify whether a plurality of recycling bins collected from a plurality of discharge sources were collected properly. A first collector collects recycling bins from at least one discharge source, loads them into his or her truck, and delivers them to the second collector's collection location. Accordingly, the recycling bins unloaded from the first collector's truck are mixed with the recycling bins of other first collectors, and thus it is difficult to maintain them as a single group. For example, when a second collector packs and delivers recycling bins in units of pallets (e.g., 60 cans) when delivering them to the final collector, because all or some of the first collector's recycling bins are mixed with all or some of other first collector's recycling bins in a pallet, it is difficult to apply the collection details of the first collector as collection information of the pallet without changes. In addition, when the n-th (where n is a natural number equal to or greater than 1) collector does not collect respective pieces of tag information of all of collected recycling bins individually as in the method described above with reference to FIGS. 5 through 8, recycling bins may be missing or unregistered recycling bins may be collected during a collection process.

Therefore, the final collector 130 needs to verify whether tag information of the recycling bins registered in the blockchain 205 is identical with tag information 1030 of all of actually collected recycling bins 1000. The final collector transmits, to the apparatus 200 through the user terminal 240, the tag information 1030 of the recycling bins obtained by tagging the tag 1020 of each recycling bin 1010. For example, when the number of recycling bins collected in a final collection stage is 100, the final collector 130 tags all of the respective tags of the 100 recycling bins.

The apparatus 200 compares the tag information 1030 of the recycling bins received from the user terminal 240 of the final collector with the tag information of the recycling bins mapped with the identification information of the final collector stored in the blockchain 205 and identify any recycling bin of which pieces of tag information do not match with each other. The apparatus 200 may transmit the tag information of a mismatched recycling bin to the final collector's user terminal 240 or a predefined manager terminal, or may store the tag information within the apparatus 200. For example, when A tag information is present among tag information obtained by tagging all of the recycling bins 1000 collected by the final collector, but A tag information is not present in recycling bin tag information of the final collector stored in the blockchain 205, the apparatus 200 may identify information that a recycling bin of the A tag information was collected incorrectly, and may provide the information to the final collector's user terminal 240, etc. As another example, when B tag information exists among the final collector's recycling bin tag information stored in the blockchain, but B tag information does not exist among recycling bin tag information identified by tagging the actual collected recycling bin, the apparatus may provide, to the user terminal 240 of final collector, etc., information indicating that a recycling bin corresponding to the B tag information has not been collected.

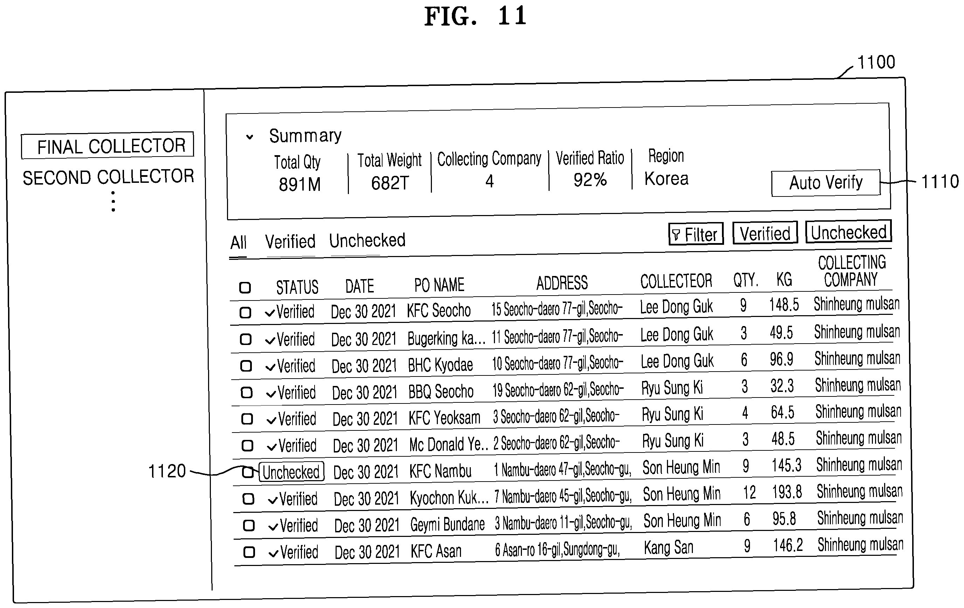

FIG. 11 illustrates an example of displaying a recycling bin list stored in a blockchain, according to an embodiment of the present disclosure.

Referring to FIG. 11, the apparatus 200 may provide a list of recycling bins collected by each collector based on recycling bin tag information stored in the blockchain 205 and the n-th collection information mapped with the recycling bin tag information. For example, when the transaction details of a recycling bin from a discharger to a final collector are generated as transaction information and stored in the blockchain, the apparatus 200 may check transaction details from a discharge source of the recycling bin to the final collector of the recycling bin, based on tag information of the recycling bin.

The apparatus 200 may provide a user interface 1100 capable of selecting a discharger or a collector. For example, when the final collector is selected through the user interface 1100, the apparatus 200 may display the tag information of the recycling bin mapped and stored with the identification information of the final collector and collection information of a collector at each stage as a recycling bin list.

According to another embodiment, when the final collector verifies the recycling bin by tagging the tags of all recycling bins by using the method of FIG. 10 (operation 1110), the apparatus 200 may display information 1120 of recycling bins with problems in the final collector's recycling bin list on the recycling bin list. According to another embodiment, when a verification request is made, the apparatus 200 may display not only missing or added recycling bins but also a result of verifying recycling bins by comparing, for example, an actual discharge location of the discharger with a registered discharge location and an actual collection location of the collector with a registered collection location. In addition, when the first collector or the discharger is selected through the user interface 1100, the apparatus 200 may identify and display a list of recycling bins collected by the first collector or a list of recycling bins discharged by the discharger.

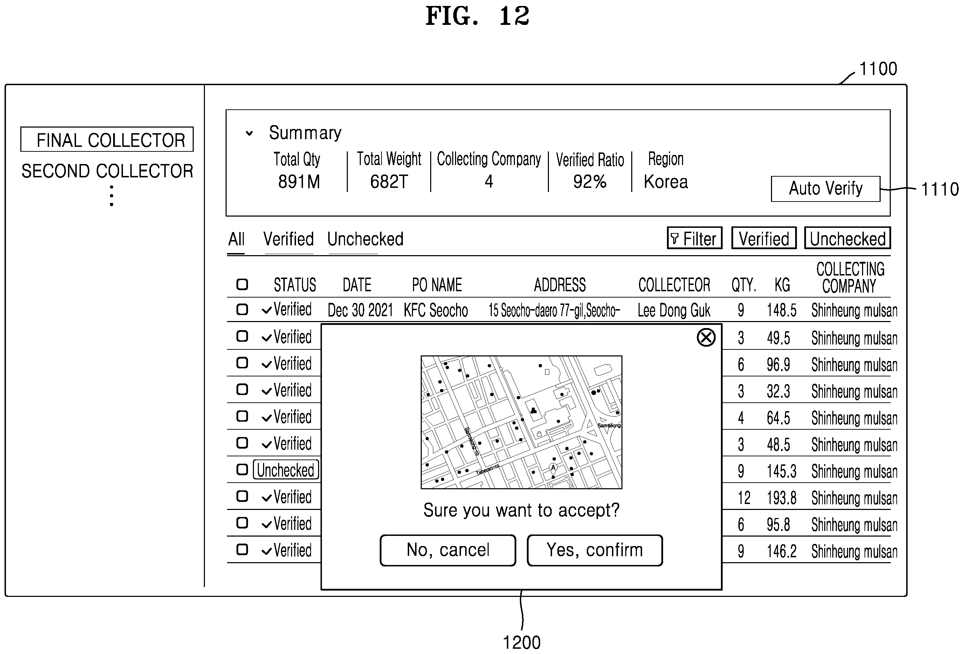

FIG. 12 illustrates an example of a method of checking a location from a recycling bin list, according to an embodiment of the present disclosure.

Referring to FIG. 12, when specific recycling bin information is selected from the recycling bin list of FIG. 11, the apparatus 200 may display, for example, a discharge location or collection location of the recycling bin information on a map 1200. For example, information about the discharger and information about a collector at each stage may be displayed together on the final collector's recycling bin list displayed on the user interface 1100. When a user (e.g., a final collector or a manager) selects discharger information from the recycling bin list, the apparatus 200 may display the discharge location of a corresponding recycling bin on a map. As another example, when second collector information is selected, the apparatus 200 may display, on the map, location information where the second collector has collected the recycling bin. Through the map, the final collector or the manager, for example, may easily identify whether collection at each stage, starting from discharge, has been discharged or collected at a correct location.

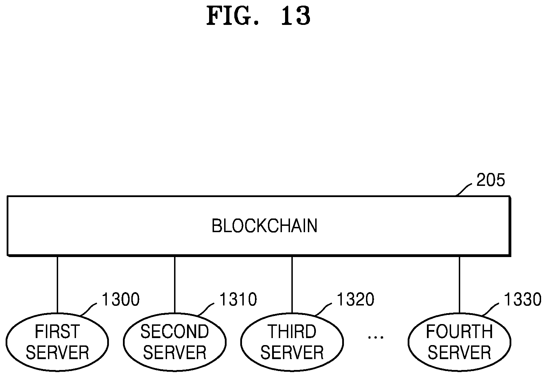

FIG. 13 is a diagram illustrating an example of a method of storing information stored in a blockchain, in a distributed manner, according to an embodiment of the present disclosure.

Referring to FIG. 13, the apparatus 200 may store the blockchain 205 in a distributed manner in a plurality of servers 1300, 1310, 1320, and 1330 through distributed ledger technology. Because the blockchain 205 itself is already a widely known structure, a further description thereof will be omitted.

The operating entities of the plurality of servers 1300, 1310, 1320, and 1330 may be the same as or different from each other. For example, first, second, third, and fourth servers 1300, 1310, 1320, and 1330 may be servers operated by different entities, like a first server being a server operated by a final collector of waste cooking oil, a second server being a server operated by a final collector of plastic, and a third server being a server operated by a national agency or an export certification agency.

When the operating entities of multiple servers are different from each other, a collectors at a specific stage may view, for example, collection information of collectors at the same stage or at different stages. For example, when collectors are different business owners, a route through which each collector collects recycling bins may correspond to trade secret information, so it is necessary for preventing information from being shared. A first collector wants to hide information about a discharge source from other first collectors or higher-level collectors, and a second collector also wants to hide his or her collection details from the first collectors to prevent the first collectors from leaving.

To this end, the apparatus 200 may individually encrypt pieces of first through n-th collection information and may store them in the blockchain 205. For example, the apparatus 200 may protect trade secrets by encrypting transaction information before and after an entity that stores information in a blockchain. Storage of the n-th collection information of the n-th collector and (n-1)^{th} collection information of an (n-1)^{th} collector may be encrypted with different encryption keys and stored. Each of the servers 1300, 1310, 1320, and 1330 may have only an encryption key (or a decryption key) for accessible collection information. For example, when the second server 1310 is a server of the final collector of used cooking oil, the second server 1320 includes a key (for example, an encryption key or decryption key) capable of decrypting the collection details of the used cooking oil. Dischargers who discharge waste cooking oil and collectors who collect the waste cooking oil may access the second server and check the collection information of a channel the dischargers and the collectors belong to. For example, when the n-th collector accesses the second server 1320 to request for information provision, the second server 1320 may provide only n-th collection information collected by the n-th collector excluding (n-1)^{th} collection information or (n+1)^{th} collection information from the collection information of waste cooking oil. In other words, the second server 1320 includes a plurality of channels for dischargers and collectors, and may provide different types of information according to which channel a discharger and a collector belong to.

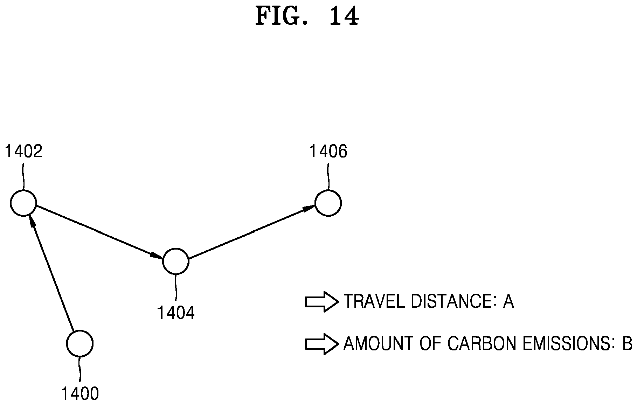

FIG. 14 is a diagram illustrating an example of a method of calculating the amount of carbon emissions produced to collect recyclables, according to an embodiment of the present disclosure.

Referring to FIG. 14, the first collector may visit a plurality of discharge sources 1400, 1402, 1404, and 1406 to collect recycling bins. The apparatus 200 may identify a movement path of a first collector, based on location information of a user terminal of the first collector, and may calculate the amount of carbon emissions proportional to the movement path. For example, when the first collector collects a recycling bin by using a truck, the carbon emissions per km of the truck may be predefined, so the apparatus 200 may identify a travel distance of the truck based on the user terminal of the first collector and multiply the travel distance by the carbon emissions per km to thereby calculate the amount of carbon emissions produced when the first collector visits the plurality of discharge sources 1400, 1402, 1404, and 1406 and collects the recycling bins.

Referring to FIG. 1, because a plurality of recycling bins collected by the final collector 130 are recycling bins collected by a plurality of first collectors, the apparatus 200 may obtain the amount of carbon emissions produced up to the collection stage of the final collector 130 by adding up the amounts of carbon emissions of the plurality of first collectors. For example, the apparatus 200 may calculate the total amount of carbon emissions from the final collector's recycling bin collection by summing first carbon emissions from a 1st-1 collector, second carbon emissions from a 1st-2 collector, and third carbon emissions from a 1st-3 collector.

According to another embodiment, the apparatus 200 may identify carbon emissions from n-th (where n is a natural number equal to or greater than 2) or higher collectors. For example, because the n-th collector loads recycling bins collected from at least one (n-1)th collector onto a truck and then moves to a collection location of the (n+1)th collector, the apparatus 200 may identify the amount of carbon emissions from recycling bin collection by the n-th collector by identifying a distance traveled from the n-th collector's collection location to the (n+1)th collector's collection location, based on the location information of the n-th collector's user terminal. The apparatus may calculate the total carbon emissions by accumulating and summing carbon emissions during stages from first collection to final collection. Because the amount of carbon emissions up to the final collection stage may be confirmed, the final collector may present the amount of carbon emissions as a sales condition when selling recyclables.

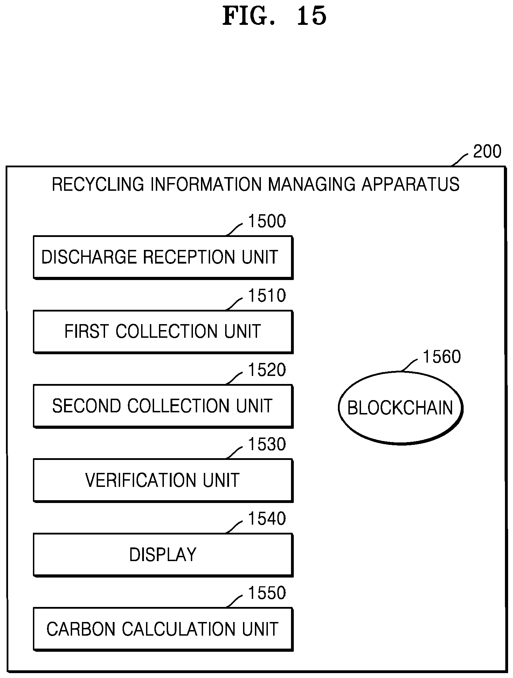

FIG. 15 is a block diagram of a structure of an example of a recycling information managing apparatus according to an embodiment of the present disclosure.

Referring to FIG. 15, the recycling information managing apparatus 200 includes a discharge reception unit 1500, a first collection unit 1510, a second collection unit 1520, a verification unit 1530, a display 1540, a carbon calculation unit 1550, and a blockchain 1560. According to an embodiment, the recycling information managing apparatus 200 may be implemented as a computing device including a memory, a processor, an input/output device, etc. In this case, each configuration may be implemented in software, and then loaded in the memory and performed by the processor.

When the discharge reception unit 1500 receives recycling information including tag information of a recycling bin and identification information of a discharger who discharges recyclables from the user terminal 210 of the discharger, the discharge reception unit 1500 stores the recycling information in the blockchain 1560. A tag on which a QR code containing tag information is printed is attached to the recycling bin. An example of the tagged recycling bin is shown in FIG. 3.

When the first collection unit 1510 receives the identification information of the first collector from the user terminal 220 of the first collector who collected the recycling bin included in the recycling information, the first collection unit 1510 stores, in the blockchain, first collection information in which the identification information of the first collector is mapped with the tag information of the recycling bin collected by the first collector.

According to another embodiment, when the first collection unit 1510 receives one piece of tag information among pieces of tag information of a plurality of recycling bins included in the recycling information from the user terminal 220 of the first collector, the first collection unit 1510 may identify the recycling information including the tag information received from the user terminal 220 of the first collector from the blockchain 205, and may map and store the tag information of the plurality of recycling bins included in the recycling information identified from the blockchain 205 with the identification information of the first collector. An example thereof is illustrated in FIG. 6.

When the second collection unit 1520 receives identification information of the n-th collector from a user terminal (e.g., 230 or 240) of the n-th collector who collected the recycling bin from an (n-1)th collector (where n is a natural number equal to or greater than 2), the second collection unit 1520 stores, in the blockchain, n-th collection information in which the identification information of the n-th collector is mapped with the tag information of the recycling bin collected by the n-th collector.

According to another embodiment, the second collection unit 1520 may map and store the tag information of the recycling bin collected by the (n-1)th collector identified from the blockchain 205 based on the identification information of the (n-1)th collector received from the user terminal 230 or 240 of the n-th collector with the identification information of the n-th collector. An example thereof is illustrated in FIGS. 7 and 8.

At least one of first collection information received by the first collection unit 1510 through to the n-th collection information received by the second collection unit 1520 may further include location information received from the user terminal 220 of the first collector through to the user terminal 230 or 240 of the n-th collector.

The verification unit 1530 may verify whether a discharge request is proper, by comparing the first location information received through the user terminal 210 of a discharger with previously-stored second location information of a discharger identified based on the discharger's identification information. An example of a verifying method is illustrated in FIG. 9.

The display 1540 may display tag information of a plurality of recycling bins stored in the blockchain 205 and discharger information or collector information mapped with the tag information, and may map and display the location information of the discharger information or the collector information on a map. An example of a method of displaying information stored in the blockchain 205 is shown in FIGS. 11 and 12.

The carbon calculation unit 1550 may identify a movement line of the first collector who collected the recycling bins of a plurality of dischargers existing at different locations through the location of the user terminal of the first collector, and calculates carbon emissions of the first collector, based on the length of the movement line. An example of calculating carbon emissions is illustrated in FIG. 14.

FIG. 16 is a table showing an example of recycling information stored in a blockchain, according to an embodiment of the present disclosure.

Referring to FIG. 16, the apparatus 200 may store transaction details of sale and purchase of a recycling bin in the blockchain, based on the tag information of the recycling bin. For example, when the apparatus receives, from a discharger user terminal, tag information of a recycling bin that is to be discharged, the apparatus stores, in a blockchain 1600, recycling information including tag information 1610 of the recycling bin and identification information of the discharger user terminal (i.e., From - To information 1620). According to an embodiment, the recycling information may further include a transaction date, discharge source information, address information, weight or volume information, etc.

In addition, when the apparatus receives the identification information of the first collector from the user terminal of the first collector who collected the recycling bin from the discharger, the apparatus stores, in the blockchain 1600, first collection information including each identification information 1620 of dischargers (From) and collectors (To) corresponding to the transaction details of the recycling bin, based on the tag information 1610 of the collected recycling bin. In this way, collection information including transaction details of the recycling bin until the final collector collects the recycling bin may be stored in the blockchain 1600. The apparatus 200 may check transaction details from the discharger of the recycling bin to the final collector, based on the tag information 1610 of the recycling bin.

The present disclosure can be embodied as computer-readable program codes on a computer readable recording medium. The computer readable recording medium is any type of recording device that stores data which can thereafter be read by a computer system. Examples of the computer-readable recording medium include ROM, RAM, CD-ROMs, magnetic tapes, floppy discs, and optical data storage media. The computer readable recording medium can also be distributed over network coupled computer systems so that the computer readable code is stored and executed in a distributed manner.

While the present disclosure has been particularly shown and described with reference to embodiments thereof, it will be understood by those of ordinary skill in the art that various changes in form and details may be made therein without departing from the spirit and scope of the disclosure as defined by the appended claims. It should be understood that the disclosed embodiments should be considered in a descriptive sense only and not for purposes of limitation. Therefore, the scope of the present disclosure is defined not by the detailed description of the present disclosure but by the appended claims, and all differences within the scope will be construed as being included in the present disclosure.

## Claims

1. A recycling information managing method performed by a recycling information managing apparatus, the recycling information managing method comprising:
when receiving, from a user terminal of a discharger discharging recyclables or waste, recycling information including tag information of a recycling bin containing the recyclables or waste and identification information of the discharger, storing the recycling information in a blockchain;
when receiving identification information of a first collector who collected the recycling bin included in the recycling information from a user terminal of the first collector, mapping first collection information including the identification information of the first collector with the tag information of the recycling bin collected by the first collector and storing the first collection information in the blockchain; and
when receiving identification information of an n-th collector who collected the recycling bin from an (n-1)th collector (where n is a natural number equal to or greater than 2) from a user terminal of the n-th collector, mapping n-th collection information including the identification information of the n-th collector with the tag information of the recycling bin collected by the n-th collector and storing the n-th collection information in the blockchain.

2. The recycling information managing method of claim 1,
wherein
the recycling bin is a bin containing recyclables or waste, and
the tag information of the recycling bin comprises recycling bin identification information stored in a QR code of a tag attached to one side of the recycling bin.

3. The recycling information managing method of claim 2, wherein the recycling bin identification information is encrypted to prevent forgery and falsification.

4. The recycling information managing method of claim 1, wherein the recycling information further comprises a collection location, a weight or volume, or image information of the recyclables or waste.

5. The recycling information managing method of claim 1, wherein the receiving of the recycling information comprises:
receiving first location information of the user terminal of the discharger;
identifying pre-stored second location information of the discharger, based on the identification information of the discharger; and
comparing the first location information with the second location information and accepting a discharge request when the first location information is identical with the second location information.

6. The recycling information managing method of claim 1,
wherein
the recycling information comprises tag information of a plurality of recycling bins, and
the storing of the first collection information in the blockchain comprises:
receiving one piece of tag information among pieces of tag information of the plurality of recycling bins from the user terminal of the first collector;
identifying recycling information including the tag information received from the user terminal of the first collector in the blockchain; and
mapping and storing the pieces of tag information of the plurality of collection bins included in the recycling information identified from the blockchain with the identification information of the first collector.

7. The recycling information managing method of claim 1, wherein the storing of the n-th collection information comprises:
receiving identification information of the (n-1)th collector from the user terminal of the n-th collector;
identifying tag information of at least one recycling bin collected by the (n-1)th collector from the blockchain, based on the identification information of the (n-1)th collector; and
mapping and storing the tag information of the at least one recycling bin with the identification information of the n-th collector.

8. The recycling information managing method of claim 1,
wherein
the blockchain is stored in a distributed manner in a plurality of servers through distributed ledger technology,
the first collection information through to the n-th collection information are each encrypted and stored in the blockchain, and
at least two of the plurality of servers create a channel and share a key capable of decrypting at least one of the first collection information through to the n-th collection information through the channel.

9. The recycling information managing method of claim 1, further comprising:
receiving tag information on a plurality of recycling bins collected at a final collection location from the user terminal of the n-th collector; and
performing verification by comparing the tag information of the recycling bins received from the user terminal of the n-th collector with the tag information stored in the blockchain.

10. The recycling information managing method of claim 1, wherein at least one of the first collection information through to the n-th collection information comprises location information received from the user terminal of the first collector through to the user terminal of the n-th collector.

11. The recycling information managing method of claim 10, further comprising:
displaying tag information of a plurality of recycling bins stored in the blockchain and discharger information or collector information mapped with the tag information, on a screen; and
mapping and displaying location information included in the discharger information or the collector information on a map.

12. The recycling information managing method of claim 1, comprising:
identifying a movement line of the first collector who collected recycling bins of a plurality of dischargers existing at different locations through the location of the user terminal of the first collector;
calculating an amount of carbon emissions of the first collector, based on a length of the movement line; and
calculating a total amount of carbon emissions calculated during collection of a plurality of recycling bins collected by the n-th collector, based on a movement line of a plurality of first collectors who participated in the collection of the plurality of recycling bins.

13. A recycling information managing apparatus comprising:
a discharge reception unit configured to, when receiving, from a user terminal of a discharger discharging recyclables or waste, recycling information including tag information of a recycling bin and identification information of the discharger, store the recycling information in a blockchain;
a first collection unit configured to, when receiving identification information of a first collector who collected the recycling bin included in the recycling information from a user terminal of the first collector, store, in the blockchain, first collection information in which the identification information of the first collector is mapped with the tag information of the recycling bin collected by the first collector; and
a second collection unit configured to, when receiving identification information of an n-th collector who collected the recycling bin from an (n-1)th collector (where n is a natural number equal to or greater than 2) from a user terminal of the n-th collector, store, in the blockchain, n-th collection information in which the identification information of the n-th collector is mapped with the tag information of the recycling bin collected by the n-th collector.

14. The recycling information managing apparatus of claim 13, further comprising a tag comprising the tag information,
wherein the tag is attached to one side of the recycling bin.

15. The recycling information managing apparatus of claim 13, further comprising a verification unit configured to compare first location information received from the user terminal of the discharger with previously- stored second location information of the discharger identified based on the identification information of the discharger.

16. The recycling information managing apparatus of claim 13, wherein, when receiving one piece of tag information among pieces of tag information of a plurality of recycling bins included in the recycling information from the user terminal of the first collector, the first collection unit identifies the recycling information including the tag information received from the user terminal of the first collector from the blockchain, and maps and stores tag information of the plurality of recycling bins included in the recycling information identified from the blockchain with the identification information of the first collector.

17. The recycling information managing apparatus of claim 13, wherein the second collection unit maps and stores the tag information of the recycling bin collected by the (n-1)th collector identified from the blockchain based on the identification information of the (n-1)th collector received from the user terminal of the n-th collector with the identification information of the n-th collector.

18. The recycling information managing apparatus of claim 13, wherein at least one of the first collection information through to the n-th collection information comprises location information received from the user terminal of the first collector through to the user terminal of the n-th collector.

19. The recycling information managing apparatus of claim 18, further comprising a display displaying tag information of a plurality of recycling bins stored in the blockchain and discharger information or collector information mapped with the tag information, and mapping and displaying location information of the discharger information or the collector information on a map.

20. The recycling information managing apparatus of claim 13, wherein a carbon amount calculation unit configured to identify a movement line of the first collector who collected the recycling bins of a plurality of dischargers existing at different locations through the location of the user terminal of the first collector, and calculate carbon emissions of the first collector, based on the length of the movement line.

21. A non-transitory computer-readable recording medium having recorded thereon a computer program, which, when executed by a computer, performs the method of claim 1.
